# EUROPEAN PATENT APPLICATION

(11) **EP 4 497 480 A1**
(43) Date of publication of application: **29.01.2025**
(21) Application number: 23306272.8
(22) Date of filing: 24.07.2023
(51) Int. Cl.: A62C 3/16, H01M 10/42, H01M 50/35, H01M 50/383, H01M 50/392, H01M 50/30

(54) **ELECTROCHEMICAL CELL WITH REDUCED SALTING, ASSOCIATED BATTERY MODULE AND MANUFACTURING METHOD**

(71) Applicant: Saft Groupe, 92300 Levallois-Perret (FR)
(72) Inventor: KUMM, Henrik, 572 31 OSKARSHAMN (SE); Mårlid, Björn, 572 40 OSKARSHAMN (SE)
(74) Representative: Lavoix

(57) **Abstract**

The electrochemical cell (20) comprises:
- a housing (30) defining a cavity (38);
- an electrochemical bundle (39) arranged within the cavity (38) and comprising at least one electrochemical assembly (42) comprising a positive electrode (40), a negative electrode (50) and a separator (54) interposed between the positive and negative electrodes (40, 50);
- a volume of liquid (60) arranged within the cavity (38), comprising an electrolyte and in which the electrochemical assembly (42) is at least partially immersed;
- a venting device (70) comprising a flame arrestor element, the venting device (70) being designed to allow gas generated within the cavity (38) to escape outside of the cavity (38) through the flame arrestor element.

The flame arrestor element comprises a surface tension reducing agent and the volume of liquid (60) further comprises a foam suppressant agent.

## Description

The present invention concerns an electrochemical cell comprising:
- a housing defining a cavity;
- an electrochemical bundle arranged within the cavity and comprising at least one electrochemical assembly comprising a positive electrode, a negative electrode and a separator interposed between the positive electrode and the negative electrode;
- a volume of liquid arranged within the cavity, comprising an electrolyte and in which the at least one electrochemical assembly is at least partially immersed;
- at least a venting device mounted onto the housing and comprising at least a flame arrestor element, the at least one venting device being designed to allow gas generated within the cavity to escape outside of the cavity through the at least one flame arrestor element.

The invention is applicable in particular to vented cells. A vented cell (also called "open cell") comprises a housing provided with an opening through which products of electrolysis and evaporation are allowed to escape freely from the cell to the atmosphere.

US 11 621 455 discloses an electrochemical cell comprising a housing defining a cavity and a vent designed to allow gas generated within the cavity to escape outside of the cavity through a flame arrestor.

In fact, during overcharge of electrochemical cells of the alkaline electrolyte type, water contained in the electrolyte is likely to be dissociated into oxygen and hydrogen gas. To avoid overpressure within the cavity, the venting device allows these gases to escape outside of the cavity.

However, the generated gases may also be saturated with electrolyte fluids in the form of an aerosol. If said aerosol passes through the flame arrestor element, it can end up on the exit end of the venting device. For example, in the case of a potassium hydroxide electrolyte, potassium hydroxide in aqueous form may react with the carbon dioxide CO₂ of the air to form potassium carbonate in solid form (K₂CO₃ (s); a white solid salt). This phenomenon is called "salting".

In some instances, the flame arrestor element comprises pores that are wide enough to let aerosol escape through it and salting may thus occur. The formation of potassium carbonate salt onto the venting device is detrimental to the aesthetic and to the consumer's impression on quality.

In the prior art, it is known to implement a mechanical barrier on vents such that the amount of aerosol on the exit end of the venting device is reduced. Such mechanical barrier can be in the form of a long pathway for the aerosol, a rubber cap hindering excessive aerosol build up, or/and flow back tube solutions.

However, such electrochemical cells are not entirely satisfactory. They are difficult to manufacture, their weight is increased and they remain subject to the salting phenomenon in spite of the mechanical barrier.

One aim of the invention is to provide an electrochemical cell which prevents as much as possible the formation of salt on the venting device.

For this purpose, the invention concerns a battery cell of the aforementioned type, wherein the at least one flame arrestor element comprises a surface tension reducing agent and the volume of liquid further comprises a foam suppressant agent.

The surface tension reducing agent and the foam suppressant agent cooperate to prevent the electrolyte aerosol from ending up on the exit end of the venting device. In particular, the foam suppressant agent reduces the amount of electrolyte aerosol which is generated upstream of the venting device. The surface tension agent reduces the amount of electrolyte aerosol which passes through the flame arrestor element to the exit end of the venting device. Thus, the use of a surface tension reducing agent and of a foam suppressant agent in combination makes it possible in synergy to prevent as much as possible the risk of formation of salt on the venting device.

The battery cell according to the invention may comprise one or more of the following features, taken alone or in any technically feasible combination:
- the volume of liquid presents a free surface, the free surface of the volume of liquid being formed by a continuous layer of the foam suppressant agent;
- the foam suppressant agent comprises an acid and/or an ester, for example a polyhydric alcohol phosphate ester;
- the foam suppressant agent is phosphoric acid, 2-ethylhexyl ester or ethoxylated phosphate ester or 2-ethylhexanol polyethylene glycol ether phosphate;
- the surface tension reducing agent is hydrophobic;
- the surface tension reducing agent is a silicon oil, such as polydimethylsiloxane, or a paraffinic oil;
- the flame arrestor element comprises a body, the surface tension reducing agent being contained in the body of the flame arrestor element and/or being coated onto an external surface of the body of the flame arrestor element;
- the flame arrestor element is made up of polypropylene or polyethylene, the mass ratio between the surface tension reducing agent and the polypropylene or the polyethylene is greater than 10%;
- the at least one venting device defines a venting pathway extending along a venting axis, the flame arrestor element presenting a disc shape extending in a plane substantially perpendicular to the venting axis within the venting pathway; and
- the flame arrestor element comprises pores with an average pore size between 50 µm and 100 µm.

The invention also concerns a battery module comprising at least one electrochemical cell as described above.

The invention also concerns a method of manufacturing of an electrochemical cell as described above, comprising:
- arranging the at least one electrochemical assembly within the cavity of the housing;
- mounting the at least one venting device onto the housing so that the venting device is designed to allow gas generated within the cavity to escape outside of the cavity through the flame arrestor;
- adding the volume of liquid into the cavity so that the at least one electrochemical assembly is at least partially immersed within the volume of liquid; and
- adding the foam suppressant agent within the volume of liquid.

The invention will be better understood upon reading the following description, given only as an example and made with reference to the appended drawings, in which:
- Figure 1 is a schematic illustration of a battery module according to the invention;
- Figure 2 is a cross-sectional view of an electrochemical cell comprised in the battery module of figure 1;
- Figure 3 is a cross-sectional view of a venting device of the electrochemical cell of figure 1;
- Figure 4 is a diagram illustrating the time to observe a first bubble of electrolyte aerosol on the exit end of a plurality of venting devices with surface tension reducing agent but without foam suppressant agent, in comparison with prior art electrochemical cells without surface tension reducing agent and without foam suppressant agent;
- Figure 5 is a diagram illustrating the time to observe the first bubble of electrolyte aerosol on the exit end of venting devices of electrochemical cells according to the invention (here with surface tension reducing agent and with foam suppressant agent), in comparison with electrochemical cells with surface tension reducing agent but without foam suppressant agent;
- Figure 6 is a diagram illustrating the time to observe the first bubble of electrolyte aerosol on the exit end of venting devices without surface tension reducing agent but with foam suppressant agent, in comparison with electrochemical cells without foam suppressant agent and without surface tension reducing agent;
- Figure 7 is a schematic illustration of a method of manufacturing of an electrochemical cell according to the invention.

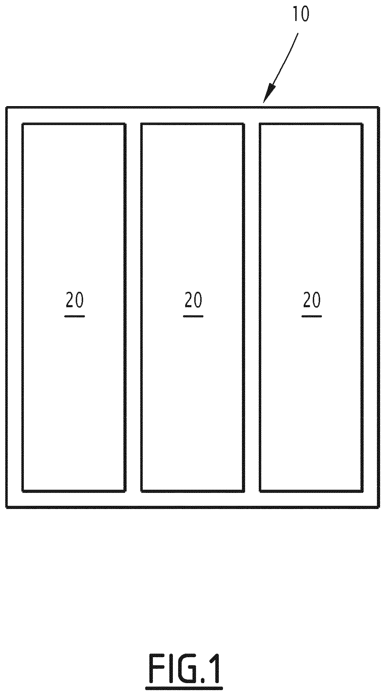

A battery module 10 according to the invention is shown on figure 1.

The battery module 10 comprises at least an electrochemical cell 20.

As shown on the example of figure 1, the battery module 10 comprises a plurality of electrochemical cells 20.

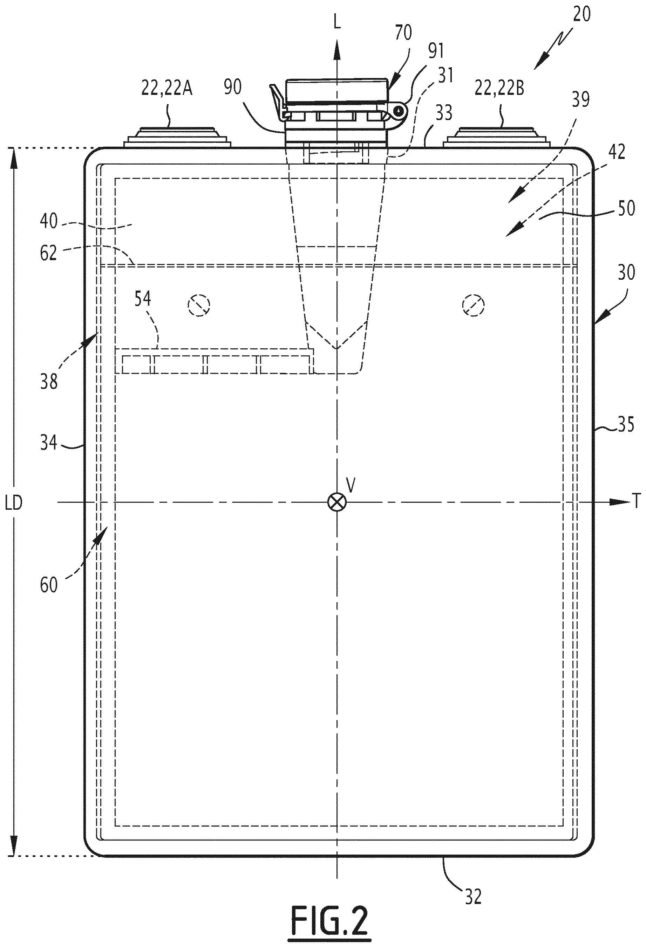

Further below, an electrochemical cell 20 according to the invention is described, with reference to figure 2. Only one electrochemical cell 20 is described hereinafter. This description applies for example to each and every one of the electrochemical cells of the battery module 10.

The electrochemical cell 20 is configured to store electrical energy and/or generate electrical power at terminals 22.

In the example of figure 2, the electrochemical cell 20 is a prismatic cell. In a variant, the electrochemical cell 20 is a cylindrical cell or a pouch cell.

For instance, the electrochemical cell 20 is a nickel-based cell, for example a nickel-metal hydride cell, a nickel-cadmium cell or a nickel-zinc cell.

In particular, the electrochemical cell 20 is a rechargeable cell (also called "secondary cell").

In view of figure 2, the electrochemical cell 20 comprises:
- a housing 30 ;
- an electrochemical bundle 39 ;
- a volume of liquid 60; and
- at least a venting device 70.

In particular, the electrochemical cell 20 further comprises the terminals 22, notably a first terminal 22A (which is for example a positive terminal) and a second terminal 22B (which is for example a negative terminal), which are mounted onto the housing 30.

As shown on the example of figure 2, the electrochemical cell 20 comprises one venting device 70. In the following, only one venting device 70 will be described. This description applies to every venting device 70 in the case wherein the electrochemical cell 20 comprises several venting devices 70.

For instance, the housing 30 extends along a longitudinal axis L between a first longitudinal wall 32 and a second longitudinal wall 33. The housing 30 further extends along a transverse axis T, substantially perpendicular to the longitudinal axis L, between a first transverse wall 34 and a second transversal wall 35. The housing 30 further extends along a vertical axis V, substantially perpendicular to the longitudinal axis L and to the transversal axis T, between a first vertical wall (not shown) and a second vertical wall (not shown).

As shown on the example of figure 2, the housing 30, in particular the second longitudinal wall 33, bears the at least one venting device 70 and the terminals 22

For instance, the housing 30 comprises a longitudinal dimension LD, measured between the first and second longitudinal wall 32, 33 along the longitudinal axis L, comprised between 80 mm and 100 mm, in particular between 83 mm and 89 mm, for example substantially equal to 86 mm.

The housing 30 defines a cavity 38.

In particular, the cavity 38 is delimited by the first and second longitudinal walls 32, 33, the first and second transversal walls 34, 35 as well as the first and second vertical walls.

The electrochemical bundle 39 is arranged within the cavity 38 and comprises at least one electrochemical assembly 42.

Each electrochemical assembly 42 comprises a positive electrode 40, a negative electrode 50 and at least one separator 54 interposed between the positive electrode 40 and the negative electrode 50.

For example, the electrodes 40, 50 are of the pocket type. Notably, each electrode 40, 50 comprises an assembly of several adjacent pockets joined together to form an electrode base. Each pocket comprises two assembled C-shaped profiles having through apertures and a briquette of active material positioned between the two profiles. Both profiles are advantageously made of metal, for example steel. The pockets extends parallel to a common axis, which is for example substantially perpendicular to the longitudinal axis L. The common axis is for example vertical or horizontal. The pockets are arranged adjacent to each other. Adjacent pockets are connected to one another along opposed side edges of the pockets, parallel to the common axis, for example by a side flank.

For example, the positive electrode 40 of each electrochemical assembly 42 is electrically connected to the first terminal 22A. Advantageously, the positive electrode 40 comprises a nickel-based hydroxide (Ni(OH)₂) as active material.

For example, the negative electrode 50 of each electrochemical assembly 42 is electrically connected to the second terminal 22B. Advantageously, the negative electrode 50 comprises metal hydride in the case of a nickel-metal hydride cell. In particular, the negative electrode 50 comprises cadmium in the case of a nickel-cadmium cell.

Each electrochemical assembly 42 is at least partially immersed in the volume of liquid 60. In particular, the positive electrode 40 and the negative electrode 50 of each electrochemical assembly 42 are at least partially immersed in the volume of liquid 60.

Preferably, each electrochemical assembly 42 is totally immersed in the volume of liquid 60. In particular, the positive electrode 40 and the negative electrode 50 of each electrochemical assembly 42 are totally immersed in the volume of liquid 60.

The volume of liquid 60 is arranged within the cavity 38.

The volume of liquid 60 comprises an electrolyte, for example an alkaline aqueous solution, notably comprising at least one hydroxide. For example, the at least one hydroxide is potassium hydroxide KOH or sodium hydroxide NaOH or lithium hydroxide LiOH. For example, the concentration of hydroxide is greater than 1 mol/L.

The volume of liquid 60 further comprises water. During charging of the cell, water is dissociated into oxygen and hydrogen gas. For instance, said oxygen and hydrogen gas is saturated with electrolyte fluids in the form of an aerosol. Said electrolyte aerosol comprises salts such as potassium, sodium or lithium.

The volume of liquid 60 further comprises a foam suppressant agent, in particular in liquid form. The foam suppressant agent reduces the formation of electrolyte aerosol.

As shown on figure 2, the free surface, in particular the entire free surface, of the volume of liquid 60 is formed by a continuous layer 62 of the foam suppressant agent. Thanks to this feature, the electrolyte contained within the volume of liquid 60 is separated from the volume of air contained within the cavity 38. This feature further reduces the formation of electrolyte aerosol.

For example, the volume of liquid 60 comprises at least 0.25 mL of foam suppressant agent per venting device 70, in particular when the longitudinal dimension LD of the housing 30 is between 80 mm and 100 mm, in particular between 83 mm and 89 mm. The skilled person would be able to adapt the volume of foam suppressant agent to the volume of electrolyte and to the dimensions of the cavity 38 to have a sufficient volume of foam suppressant agent to obtain a thin layer 62 on top of the electrolyte and not too much volume of foam suppressant agent to not affect the electrochemical performances of the cell 20.

For instance, the foam suppressant agent comprises an acid and/or an ester, for example a polyhydric alcohol phosphate ester.

In particular, the foam suppressant agent is phosphoric acid, 2-ethylhexyl ester or ethoxylated phosphate ester or 2-ethylhexanol polyethylene glycol ether phosphate.

For example, the foam suppressant agent is Zelec^{®} A081, Phospholan^{®} PE169 and/or ROKAfos^{®} 385.

The venting device 70 connects the cavity 38 and the atmosphere surrounding the electrochemical cell 20. The venting device 70 is designed to allow gas generated within the cavity 38, in particular oxygen and hydrogen gas along with electrolyte fluids in the form of aerosol, to escape outside of the cavity 38.

The venting device 70 is mounted onto the housing 30.

As shown on the example of figure 2, the venting device 70 is mounted onto the second longitudinal wall 33 of the housing 30.

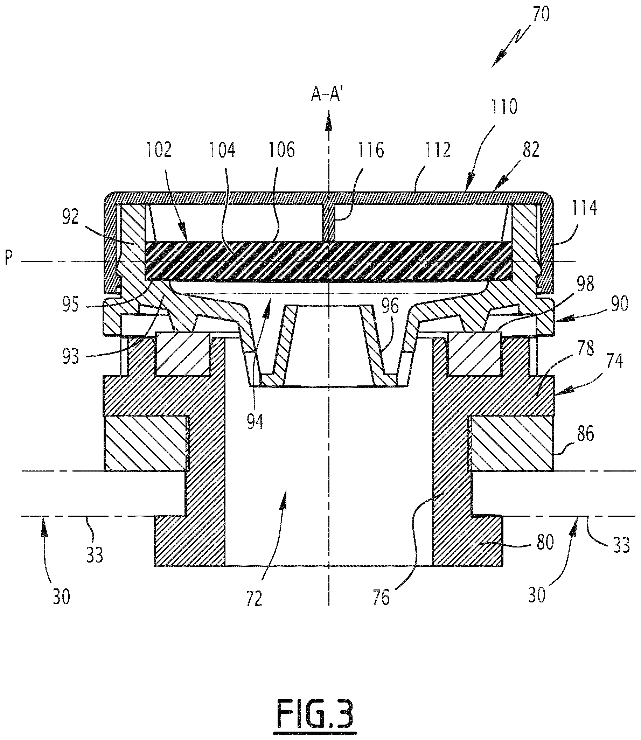

As shown on figure 3, the venting device 70 comprises at least one flame arrestor element 102. In the following, only one flame arrestor element 102 is described. The description also applies in the case wherein the venting device 70 comprises several flame arrestor elements 102.

The venting device 70 is designed to allow gas generated within the cavity 38 to escape outside of the cavity 38 through the flame arrestor element 102.

For example, the venting device 70 defines a venting pathway 72 extending along a venting axis A-A'.

As shown on the example of figure 3, the venting device further comprises:
- a base 74;
- a first sealing member 86;
- a support 90 for supporting the flame arrestor element 102;
- a second sealing member 98 ; and
- a cap 110.

The venting pathway 72 is for example delimited by the base 74 and the support 90.

The venting pathway 72 extends from the cavity 38 to the outside of the electrochemical cell 20.

The base 74 is mounted onto the housing 30, in particular onto the second longitudinal wall 33 of the housing 30.

The base 74 comprises a cylindrical wall 76 extending through a hole 31 of the housing 30, in particular of the second longitudinal wall 33.

The cylindrical wall 76 at least partially defines the venting pathway 72.

The base 74 further comprises a first 78 and a second 80 flange extending respectively outside of and inside the cavity 38. The first and second flanges 78, 80 are arranged to cooperate with the housing 30, in particular with the second longitudinal wall 33 to keep the cylindrical wall 76 in position with regards to the housing 30, in particular within the hole 31.

The first sealing member 86 is arranged between the base 74 and the housing 30. In particular, the first sealing member 86 is arranged between the first flange 78 and the housing 30, notably between the first flange 78 and the second longitudinal wall 33. For instance, the first sealing member 86 is a sealing ring arranged around the base 74, in particular around the cylindrical wall 76.

The support 90 is configured to support the flame arrestor element 102.

As shown on the example of figure 2, the support 90 is pivotally mounted onto the base 74 via a hinge 91 between a closed position (shown on figures 2 and 3) and an open position (not shown).

The support 90 comprises a cylindrical wall 92 and a lower supporting element 93.

The cylindrical wall 92 and the lower supporting element 93 delimit a reception space 94 for receiving the flame arrestor element 102.

The cylindrical wall 92 further defines at least partially the venting pathway 72.

In the closed position, the cylindrical wall 92 of the support 90 is arranged facing the cylindrical wall 76 of the base 74. In the closed position, the cylindrical wall 92 and the cylindrical wall 76 extend along the venting axis A-A'.

In the open position, the cylindrical wall 92 of the support 90 is arranged away from the cylindrical wall 76 of the base 74.

The second sealing member 98 is arranged between the support 90 and the base 74, in particular when the support 90 is in the closed position. For instance, the second sealing member 98 is a sealing ring.

The lower supporting element 93 extends substantially radially with regards to the venting axis A-A'.

The lower supporting element 93 supports the flame arrestor element 102.

In particular, the lower supporting element 93 comprises an annular portion 95 extending around the venting axis A-A', onto which the flame arrestor element 102 bears.

The lower supporting element 93 comprises a central cylindrical skirt 96 extending around the venting axis A-A'.

The central cylindrical skirt 96 is designed to allow the flow of gas inside the reception space 94.

The flame arrestor element 102 is configured to prevent the propagation of flames from within the cavity 38 to the outside of the cavity 38.

The flame arrestor element 102 is further configured to let gas generated within the cavity 38 flow through it.

For instance, the flame arrestor element 102 has pores with an average pore size between 50 µm and 100 µm.

Advantageously, the flame arrestor element 102 is arranged within the reception space 94.

For instance, the flame arrestor element 102 comprises a body 104.

Advantageously, the flame arrestor element 102 presents a disc shape extending in a plane P substantially perpendicular to the venting axis A-A' within the venting pathway 72.

As shown on the example of figure 3, the flame arrestor element 102 is kept in position within the reception space 94 by cooperating with the cylindrical wall 92, the lower supporting element 93 and the cap 110, in particular with at least a rib 116 of the cap 110.

Advantageously, the flame arrestor element 102 covers the entire cross section of the venting pathway 72 portion delimited by the support 90.

For instance, the flame arrestor element 102, in particular its body 104, is made up of polypropylene or polyethylene. Since, polypropylene and polyethylene are hydrophobic materials, this feature makes it possible to reduce the amount of aerosol that passes through the flame arrestor element 102.

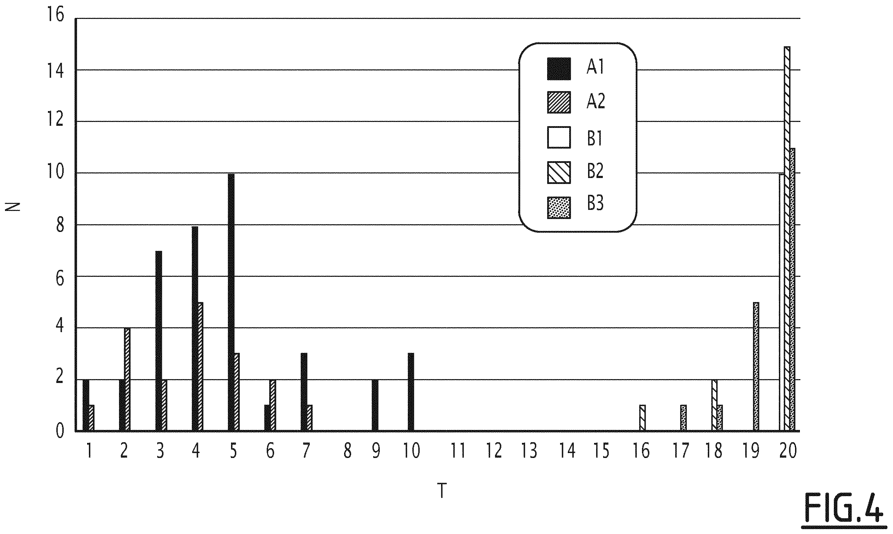

The flame arrestor element 102 further comprises a surface tension reducing agent. Thanks to this feature, the amount of aerosol that passes through the flame arrestor element 102 is further reduced. Advantageously and surprisingly, the use of both a surface tension reducing agent and a foam suppressant agent makes it possible to reduce as much as possible the flow of aerosol through the flame arrestor element and thus to reduce as much as possible the formation of salt on the venting device 70, in particular on the cap 110 or in the reception space 94. This surprising effect is shown on the diagrams of figures 4 to 6 which will be described below.

For example, the surface tension reducing agent is hydrophobic.

For example, the surface tension reducing agent is a silicon oil, such as polydimethylsiloxane, or a paraffinic oil.

According to an example, the surface tension reducing agent is contained within the body 104 of the flame arrestor element 102. In other terms, the surface tension reducing agent is part of the material making up the body 104.

According to a variant, the surface tension reducing agent is coated onto an external surface 106 of the body 104.

Advantageously, the mass ratio between the surface tension reducing agent and the polypropylene or the polyethylene is greater than 10%.

The cap 110 is configured to at least partially cover the support 90.

The cap 110 is movable between a covering configuration (shown on figures 2 and 3) in which the cap 110 covers the reception space 94 and an uncovering configuration (not shown) in which the cap 110 is arranged away from the support 90.

For example, in the covering configuration, the cap 110 is kept in position onto the support 90 by snap-fitting cooperation with the support 90.

In the uncovering configuration, the flame arrestor element 102 can be replaced by another flame arrestor element 102.

The cap 110 comprises a main wall 112 and a cylindrical skirt 114 extending substantially perpendicularly to the main wall 112.

In the covering configuration, the cap 110, in particular the main wall 112, delimits the reception space 94, in conjunction with the cylindrical wall 92 and the lower supporting element 93.

The cap 110 comprises the at least one rib 116. The at least one rib 116 extends from the main wall 112 within the reception space 94 and is adapted to bear against the flame arrestor element 102.

Advantageously, the cap 110 comprises at least one venting hole (not shown), arranged within the main wall 112 and adapted to allow the escape of gas outside of the venting device 70.

Figures 4, 5 and 6 illustrate diagrams which show the technical advantages of the invention.

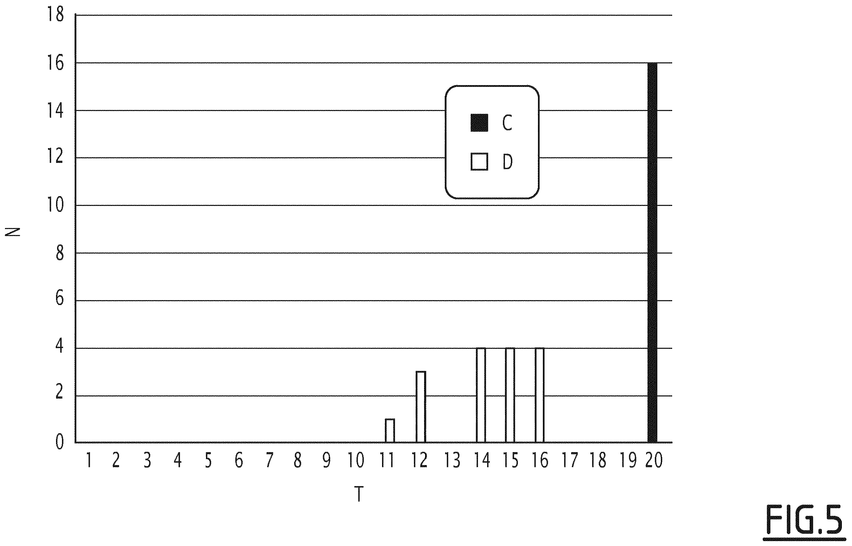

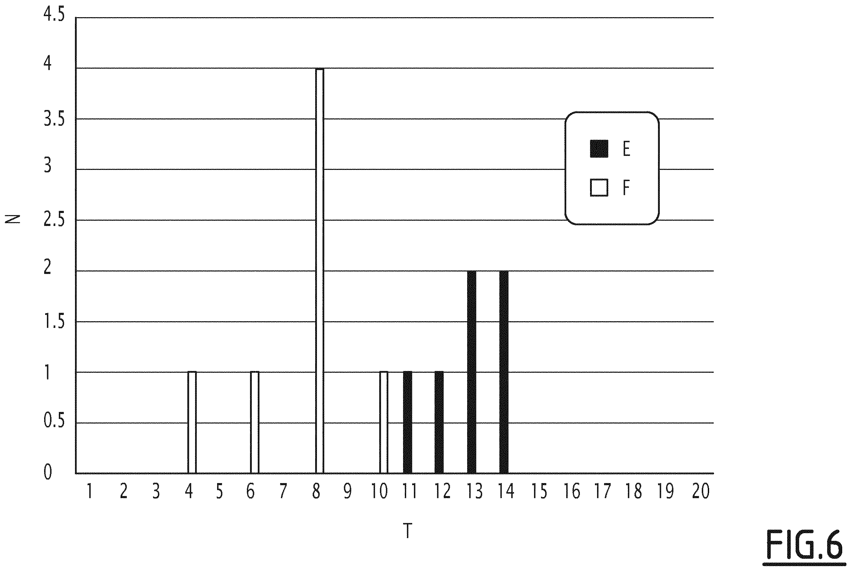

These diagrams illustrate the results of experiments carried out with a large number of:
- electrochemical cells wherein the flame arrestor element does not comprise the surface tension reducing agent and the volume of liquid does not comprise the foam suppressant agent (bars A1 and A2 in figure 4; bars F in figure 6);
- electrochemical cells wherein the flame arrestor element comprises the surface tension reducing agent but wherein the volume of liquid does not comprise the foam suppressant agent (bars B1, B2 and B3 in figure 4; bars D in figure 5);
- electrochemical cells 20 which are according to the invention (bar C in figure 5); and
- electrochemical cells wherein the volume of liquid comprises the foam suppressant agent but wherein the flame arrestor element does not comprise the surface tension reducing agent (bars E in figure 6).

Except for the presence of surface tension reducing agent or the presence of foam suppressant agent, the electrochemical cells are substantially identical.

Each experiment is as follows. The electrochemical cell is arranged in a room at ambient temperature (that is 20±5 °C). At the start of the experiment, the electrochemical cell is at maximum voltage. Then, the electrochemical cell is charged for 10 hours at 0.2 amperes. After that, the electrochemical cell is at rest for 1 hour. Then the electrochemical cell is discharged at 0.2 ampere during 5 hours. After that, the electrochemical cell is at rest for 1 hour. Then the electrochemical cell is charged for 10 hours at 0.2 amperes. The time lapsed between the start of the experiment until the first bubble of electrolyte aerosol is observed on the exit end of the venting device, in particular on the cap or in the reception space, is measured.

The diagrams of figures 4, 5 and 6 are bar graphs illustrating the number N (y-axis) of experiments which led to a time T (x-axis) in hours to observe the first bubble of electrolyte aerosol on the exit end of the venting device of the corresponding electrochemical cell.

As shown on figure 4, the time T to observe the first bubble of electrolyte aerosol on the exit end of venting devices wherein the volume of liquid does not comprise the foam suppressant agent and wherein the flame arrestor element does not comprise the surface tension reducing agent is between 1 hour and 10 hours. In comparison, the time T to observe the first bubble of electrolyte aerosol on the exit end of venting devices wherein the volume of liquid does not comprise the foam suppressant agent but wherein the flame arrestor element comprises the surface tension reducing agent is between 16 hours and 20 hours. The diagram of figure 4 shows that the fact that the flame arrestor element comprises a surface tension reducing agent (without any effect of foam suppressant agent) increases significantly the time to observe the first bubble of electrolyte aerosol. The passage of electrolyte aerosol through the flame arrestor element is considerably slowed down by the surface tension reducing agent.

As shown on figure 5, the time T to observe the first bubble of electrolyte aerosol on the exit end of venting devices wherein the volume of liquid does not comprise the foam suppressant agent but wherein the flame arrestor element comprises the surface tension reducing agent is between 11 hours and 16 hours.

In comparison, the time T to observe the first bubble of electrolyte aerosol on the exit end of venting devices 70 wherein the volume of liquid comprises the foam suppressant agent and wherein the flame arrestor element comprises the surface tension reducing agent is substantially equal to 20 hours.

The diagram of figure 5 shows that the fact that the flame arrestor element comprises a surface tension reducing agent and that the volume of liquid comprises a foam suppressant agent further significantly increases the time to observe the first bubble of electrolyte aerosol. Instead of being between 16 hours and 20 hours (see figure 4) when only the surface tension reducing is used, the time T is substantially equal to 20 hours when both the surface tension reducing agent and the foam suppressant agent is used.

Thus, thanks to the invention, the passage of electrolyte aerosol through the flame arrestor element is significantly slowed down in comparison to venting devices wherein the volume of liquid does not comprise the foam suppressant agent but wherein the flame arrestor element comprises the surface tension reducing agent.

As shown on figure 6, the time T to observe the first bubble of electrolyte aerosol on the exit end of venting devices wherein the volume of liquid does not comprise the foam suppressant agent and wherein the flame arrestor element does not comprise the surface tension reducing agent is between 4 hours and 10 hours.

In comparison, the time T to observe the first bubble of electrolyte aerosol on the exit end of venting devices wherein the volume of liquid comprises the foam suppressant agent and wherein the flame arrestor element does not comprise the surface tension reducing agent is between 11 hours and 14 hours.

The diagram of figure 6 shows that if the volume of liquid comprises a foam suppressant agent (without any effect of a surface tension reducing agent), the time to observe the first bubble of electrolyte aerosol increases. The passage of electrolyte aerosol through the flame arrestor element is considerably slowed down thanks to the presence of foam suppressant agent.

Figures 4, 5 and 6 shows that the use in combination of both the surface tension reducing agent and the foam suppressant agent surprisingly makes it possible to obtain a time T as long as possible. Thus, the use in combination of both the surface tension reducing agent and the foam suppressant agent makes it possible to provide an electrochemical cell which prevents as much as possible the formation of salt on the venting device.

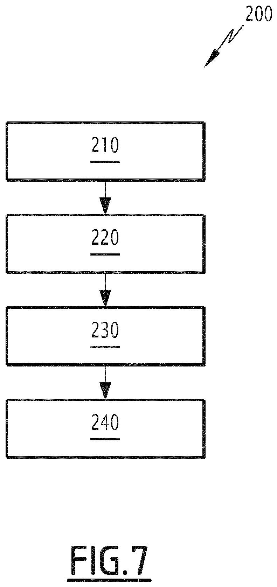

With reference to figure 7, a method 200 of manufacturing of the electrochemical cell 20 is described.

For instance, the method 200 comprises a step of providing the housing 30, at least one electrochemical assembly 42, the electrolyte, the foam suppressant agent and the venting device 70.

The method 200 comprises a step 210 of arranging the at least one electrochemical assembly 42 within the cavity 38 of the housing 30.

The method 200 further comprises a step 220 of mounting the at least one venting device 70 onto the housing 30 so that the venting device 70 is designed to allow gas generated within the cavity 38 to escape outside of the cavity 38 through the flame arrestor 102.

In particular, the base 74 is mounted onto the housing 30, notably onto the second longitudinal wall 33.

The method 200 further comprises a step 230 of adding the volume of liquid 60 into the cavity 38 so that the at least one electrochemical assembly 42 is at least partially, preferably totally, immersed within the volume of liquid 60. In particular, the volume of liquid 60 is added so that the at least one electrochemical assembly 42, notably each positive electrode 40 and each negative electrode 50 is at least partially, advantageously totally immersed within the volume of liquid 60.

For instance, the electrolyte is poured into the cavity 38 to form the volume of liquid 60. Enough electrolyte is poured into the cavity 38 so that the electrodes 40, 50 are at least partially, preferably totally, immersed within the volume of liquid 60.

Advantageously, during step 230, the support 90 is put in the open position so that the volume of liquid 60 is poured into the cavity 38 through the portion of venting pathway 72 delimited by the base 74 of the venting device 70.

The method 200 further comprises a step 240 of adding the foam suppressant agent within the volume of liquid 60. Advantageously, the foam suppressant agent, which is for example in liquid form, is poured into the cavity 38 and added into the volume of liquid 60. For instance, during step 240, the support 90 remains in the open position so that the foam suppressant agent is poured into the cavity 38 through the portion of venting pathway 72 delimited by the base 74 of the venting device 70. When the foam suppressant agent 60 has been added into the cavity 38, the support 90 is put in the closed position.

For instance, the method 200 further comprises a step of arranging the flame arrestor element 102 within the reception space 94 of the venting device 70. Advantageously, during this step, the cap 110 is arranged in the uncovering configuration (that is, it is arranged away from the support 90) and the flame arrestor element 102 is then arranged within the reception space 94. When the flame arrestor element 102 has been arranged within the reception space 94, the cap 110 is rearranged in the covering configuration. In particular, the flame arrestor element 102 is arranged so that it cooperates with the cylindrical wall 92, the lower supporting element 93 and, advantageously the cap 110 when the cap 110 is rearranged in the covering configuration.

Thanks to the invention, in particular thanks to the use of a surface tension reducing agent and of a foam suppressant agent in combination, the risk of formation of salt on the venting device is reduced as much as possible.

## Claims

1. Electrochemical cell (20) comprising:
- a housing (30) defining a cavity (38);
- an electrochemical bundle (39) arranged within the cavity (38) and comprising at least one electrochemical assembly (42) comprising a positive electrode (40), a negative electrode (50) and a separator (54) interposed between the positive electrode (40) and the negative electrode (50);
- a volume of liquid (60) arranged within the cavity (38), comprising an electrolyte and in which the at least one electrochemical assembly (42) is at least partially immersed;
- at least a venting device (70) mounted onto the housing (30) and comprising at least a flame arrestor element (102), the at least one venting device (70) being designed to allow gas generated within the cavity (38) to escape outside of the cavity (38) through the at least one flame arrestor element (102),
**characterized in that** the at least one flame arrestor element (102) comprises a surface tension reducing agent and the volume of liquid (60) further comprises a foam suppressant agent.

2. Electrochemical cell (20) according to claim 1, wherein the volume of liquid (60) presents a free surface, the free surface of the volume of liquid (60) being formed by a continuous layer (62) of the foam suppressant agent.

3. Electrochemical cell (20) according to claim 1 or 2, wherein the foam suppressant agent comprises an acid and/or an ester, for example a polyhydric alcohol phosphate ester.

4. Electrochemical cell (20) according to claim 3, wherein the foam suppressant agent is phosphoric acid, 2-ethylhexyl ester or ethoxylated phosphate ester or 2-ethylhexanol polyethylene glycol ether phosphate.

5. Electrochemical cell (20) according to any one of the preceding claims, wherein the surface tension reducing agent is hydrophobic.

6. Electrochemical cell (20) according to any one of the preceding claims, wherein the surface tension reducing agent is a silicon oil, such as polydimethylsiloxane, or a paraffinic oil.

7. Electrochemical cell (20) according to any one of the preceding claims, wherein the flame arrestor element (102) comprises a body (104), the surface tension reducing agent being contained in the body (104) of the flame arrestor element (102) and/or being coated onto an external surface (106) of the body (104) of the flame arrestor element (102).

8. Electrochemical cell (20) according to any one of the preceding claims, wherein the flame arrestor element (102) is made up of polypropylene or polyethylene, the mass ratio between the surface tension reducing agent and the polypropylene or the polyethylene is greater than 10%.

9. Electrochemical cell (20) according to any one of the preceding claims, wherein the at least one venting device (70) defines a venting pathway (72) extending along a venting axis (A-A'), the flame arrestor element (102) presenting a disc shape extending in a plane (P) substantially perpendicular to the venting axis (A-A') within the venting pathway (72).

10. Electrochemical cell (20) according to any one of the preceding claims, wherein the flame arrestor element (102) comprises pores with an average pore size between 50 µm and 100 µm.

11. Battery module (10) comprising at least one electrochemical cell (20) according to any one of the preceding claims.

12. Method (200) of manufacturing of an electrochemical cell (20) according to any one of claims 1 to 10, comprising:
- arranging (210) the at least one electrochemical assembly (42) within the cavity (38) of the housing (30);
- mounting (220) the at least one venting device (70) onto the housing (30) so that the venting device (70) is designed to allow gas generated within the cavity (38) to escape outside of the cavity (38) through the flame arrestor (102);
- adding (230) the volume of liquid (60) into the cavity (38) so that the at least one electrochemical assembly (42) is at least partially immersed within the volume of liquid (60); and
- adding (240) the foam suppressant agent within the volume of liquid (60).

## Amended claims

### Amended claims in accordance with Rule 137(2) EPC.

1. Electrochemical cell (20) comprising:
- a housing (30) defining a cavity (38);
- an electrochemical bundle (39) arranged within the cavity (38) and comprising at least one electrochemical assembly (42) comprising a positive electrode (40), a negative electrode (50) and a separator (54) interposed between the positive electrode (40) and the negative electrode (50);
- a volume of liquid (60) arranged within the cavity (38), comprising an electrolyte and in which the at least one electrochemical assembly (42) is at least partially immersed;
- at least a venting device (70) mounted onto the housing (30) and comprising at least a flame arrestor element (102), the at least one venting device (70) being designed to allow gas generated within the cavity (38) to escape outside of the cavity (38) through the at least one flame arrestor element (102),
the at least one flame arrestor element (102) comprising a surface tension reducing agent,
**characterized in that** the volume of liquid (60) further comprises a foam suppressant agent, the volume of liquid (60) presenting a free surface, the free surface of the volume of liquid (60) being formed by a continuous layer (62) of the foam suppressant agent.

2. Electrochemical cell (20) according to claim 1, wherein the foam suppressant agent comprises an acid and/or an ester, for example a polyhydric alcohol phosphate ester.

3. Electrochemical cell (20) according to claim 2, wherein the foam suppressant agent is phosphoric acid, 2-ethylhexyl ester or ethoxylated phosphate ester or 2-ethylhexanol polyethylene glycol ether phosphate.

4. Electrochemical cell (20) according to any one of the preceding claims, wherein the surface tension reducing agent is hydrophobic.

5. Electrochemical cell (20) according to any one of the preceding claims, wherein the surface tension reducing agent is a silicon oil, such as polydimethylsiloxane, or a paraffinic oil.

6. Electrochemical cell (20) according to any one of the preceding claims, wherein the flame arrestor element (102) comprises a body (104), the surface tension reducing agent being contained in the body (104) of the flame arrestor element (102) and/or being coated onto an external surface (106) of the body (104) of the flame arrestor element (102).

7. Electrochemical cell (20) according to any one of the preceding claims, wherein the flame arrestor element (102) is made up of polypropylene or polyethylene, the mass ratio between the surface tension reducing agent and the polypropylene or the polyethylene is greater than 10%.

8. Electrochemical cell (20) according to any one of the preceding claims, wherein the at least one venting device (70) defines a venting pathway (72) extending along a venting axis (A-A'), the flame arrestor element (102) presenting a disc shape extending in a plane (P) substantially perpendicular to the venting axis (A-A') within the venting pathway (72).

9. Electrochemical cell (20) according to any one of the preceding claims, wherein the flame arrestor element (102) comprises pores with an average pore size between 50 µm and 100 µm.

10. Battery module (10) comprising at least one electrochemical cell (20) according to any one of the preceding claims.

11. Method (200) of manufacturing of an electrochemical cell (20) according to any one of claims 1 to 9, comprising:
- arranging (210) the at least one electrochemical assembly (42) within the cavity (38) of the housing (30);
- mounting (220) the at least one venting device (70) onto the housing (30) so that the venting device (70) is designed to allow gas generated within the cavity (38) to escape outside of the cavity (38) through the flame arrestor (102);
- adding (230) the volume of liquid (60) into the cavity (38) so that the at least one electrochemical assembly (42) is at least partially immersed within the volume of liquid (60); and
- adding (240) the foam suppressant agent within the volume of liquid (60).
